**Europäisches Patentamt**

**European Patent Office**

**Office européen des brevets**

(19)

(11) Veröffentlichungsnummer: **0 058 772
B1**

(12) **EUROPÄISCHE PATENTSCHRIFT**

(45) Veröffentlichungstag der Patentschrift:
06.02.85

(51) Int. Cl.⁴: **G 02 C 3/02**

(21) Anmeldenummer: **81110083.3**

(22) Anmeldetag: **02.12.81**

(54) **Kombinationsbrille.**

(30) Priorität: **21.02.81 DE 3106562
17.09.81 DE 3137000**

(73) Patentinhaber: **Karl Enghofer Metallwarenfabrik GmbH,
Jahnstrasse 47, D-7534 Birkenfeld (DE)**

(43) Veröffentlichungstag der Anmeldung:
**01.09.82 Patentblatt 82/35**

(72) Erfinder: **Enghofer, Klaus, Schwarzwaldstrasse 38,
D-7534 Birkenfeld (DE)**

(45) Bekanntmachung des Hinweises auf die Patenterteilung:
**06.02.85 Patentblatt 85/6**

(74) Vertreter: **Hubbuch, Helmut, Dipl.-Ing et al,
Patentanwälte Dr. Rudolf Bauer Dipl.-Ing. Helmut
Hubbuch Dipl.-Phys. Ulrich Twelmeler Westliche
Karl-Friedrich-Strasse 29-31, D-7530 Pforzheim (DE)**

(84) Benannte Vertragsstaaten:
**AT BE CH DE FR GB IT LI LU NL SE**

(56) Entgegenhaltungen:
**DE - C - 492 912
DE - U - 1 918 809
FR - A - 2 241 225
NL - A - 6 515 652
US - A - 1 876 770
US - A - 3 018 687**

**Beschreibung**

Die Erfindung bezieht sich auf eine Kombinationsbrille mit angelenkten Brillenbügeln.

Es gibt mannigfache Ausgestaltungen solcher Brillen, welche als Alltags-, Komfort- und Sportbrillen, sowie auch Schutzbrillen ausgebildet sind. Bei den letzteren, z.B. nach dem DE-GM 1 918 809, sind Gummibänder am Hinterkopf verschliessbar, um ein Herabfallen beim Sport und dgl. zu verhindern. Aus diesem Grunde eignen sich Alltags- und Komfortbrillen, bei welchen lediglich die Brillenbügel hinter die Ohren greifen nicht für Training und Sport.

Andererseits ist es nach der US-PS 3 018 687 auch bekannt bei Brillen die Brillenbügel hohl auszubilden und mit einem Zugteil zu versehen, welches unter Wirkung einer Spiralfeder eingezogen gehalten wird und bei verkürztem Brillenbügel am freien Ende beidseits Anschlussteile in Form von Ohrbügeln zur Anpassung ausziehbar hält, welche Ausführung sehr aufwendig ist.

Es ist nun Aufgabe der Erfindung hier eine Kombinationsbrille zu schaffen, welche durch verdeckte Anordnung der Elastikverbindung gleichermassen für den Alltag und für besondere Geselligkeiten als auch für Sport und dgl. brauchbar ist.

Die Kombinationsbrille, deren Kunststoff-Brillenbügel jeweils für ein Zugteil hohl ausgebildet sind und deren ausziehbare Befestigungteile am freiem Ende der Brillenbügel aus- und einfahrbar sind, kennzeichnet sich gemäss der Erfindung hierzu durch die Kombination folgender Merkmale:

a) die Zugteile sind als Gummizüge ausgebildet, welche endseitig im Scharnieranschluss festgelegt sind,

b) die Gummizüge sind in biegsamen Metallschläuchen in den hohlen Brillenbügeln geführt, welche Metallschläuche in Nuten der Bügeleinlage aufgenommen und von aufsteck- oder umspritzbaren Kunststoffbügeln umgeben sind,

c) die Verschlussteile sind als im ausgefahrenen Zustand hinter dem Kopf des Trägers verbindbare Endstücke ausgebildet, welche in eingefahrener Stellung in Taschen am Bügelende liegen.

Nach einem weiteren Gedanken der Erfindung kennzeichnet sich die Kombinationsbrille, deren Brillenbügel jeweils für ein Zugteil hohl ausgebildet sind und deren ausziehbare Befestigungteile am freien Ende der Brillenbügel aus- und einfahrbar sind durch die Kombination folgender Merkmale:

a) die Zugteile sind als Gummizüge ausgebildet, welche endseitig im Scharnieranschluss festgelegt sind,

b) die Gummizüge sind in Alu-Brillenbügeln geführt, welche eine Innennut mit zwei Seitenschenkeln besitzen, die nach dem Zubiegen den Hohlgang für die Gummizüge bilden,

c) die Verschlussteile sind als im ausgefahrenen Zustand hinter dem Kopf des Trägers verbindbare Endstücke ausgebildet, welche in eingefahrener Stellung in Taschen am Bügelende liegen.

Weitere Einzelheiten ergeben sich sodann aus den Ausführungsbeispielen, welche in der Zeichnung dargestellt und nachfolgend erläutert sind und zwar zeigen:

Fig. 1 bis 3 die perspektivische Gesamtansicht eines ersten Ausführungsbeispiels und einen vergrösserten Ausschnitt an der Bügelanlenkung und des Bügelendes der ersten Ausführungsform,

Fig. 4 bis 6 einen vergrösserten Ausschnitt an der Bügelanlenkung mit Querschnitt einer zweiten Ausführungsform und des Bügelendes,

Fig. 7 die perspektivische Teilansicht einer weiteren Ausführungsform und

Fig. 8 und 9 die Innenansicht eines Brillenbügels als weitere Ausführungsform mit Anlenkende und Bügelende mit Verschlussteil sowie

Fig. 10 und 11 die Schnittdarstellung durch den Kunststoffbügel nach Linie X-X und den Verschlussteil nach Linie XI-XI in vergrösserter Darstellung.

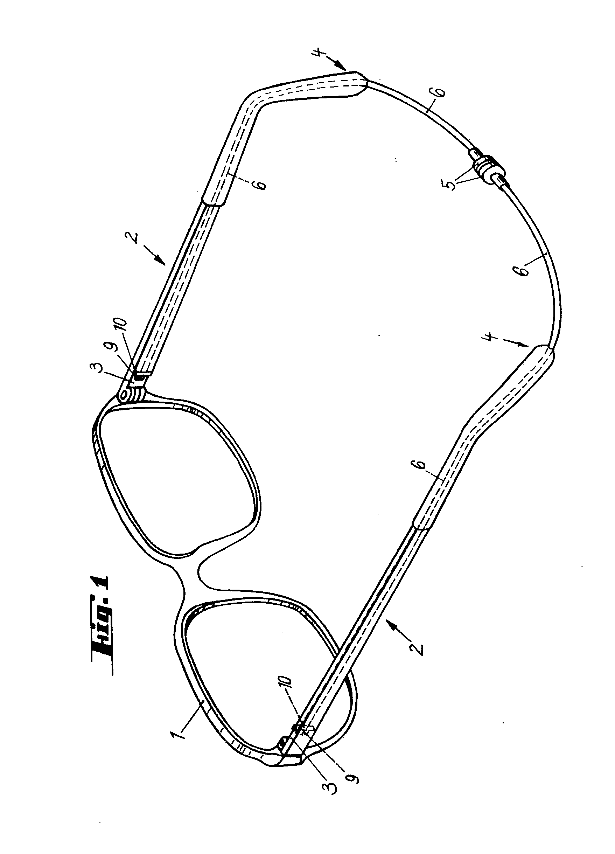

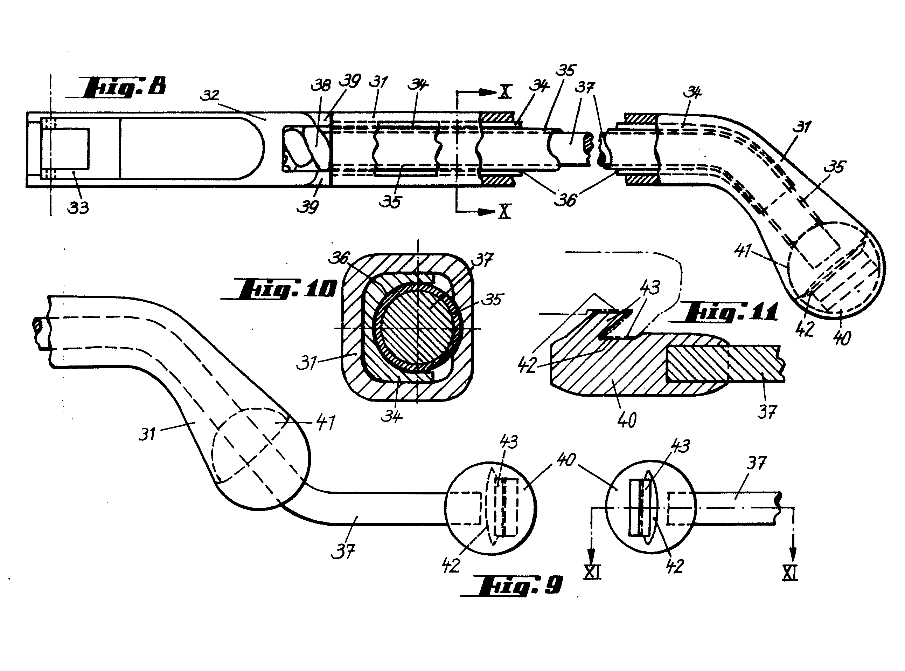

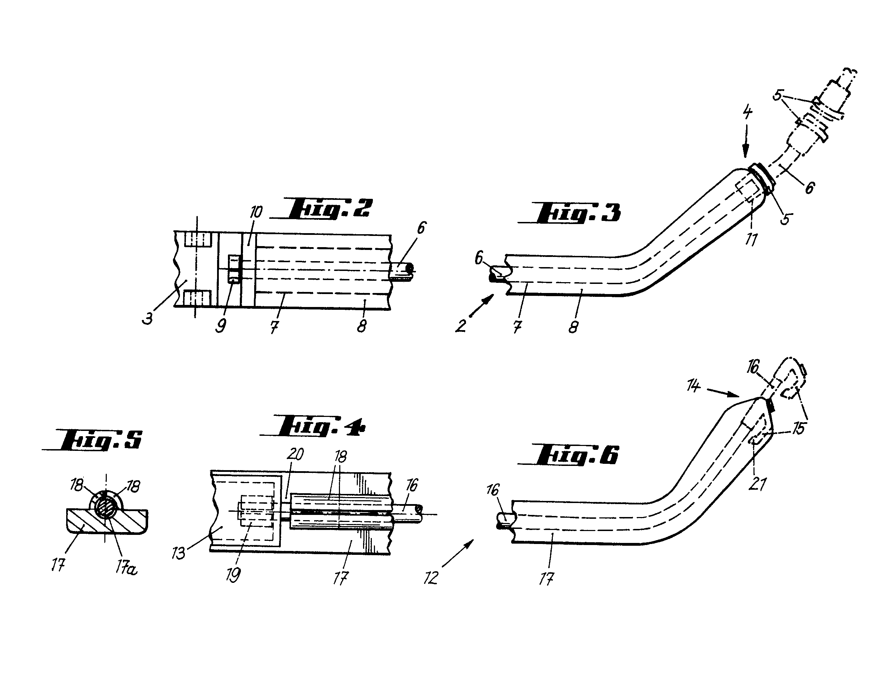

Wie aus der Zeichnung beim ersten Ausführungsbeispiel nach Fig. 1 und 3 ersichtlich wird, sind am Glasrand 1 die Brillenbügel 2, wie üblich, mittels Scharnier 3 angelenkt. Am freien Ende 4 der Brillenbügel 2 ist sodann jeweils ein Verschlussteil 5 mittels Gummizug 6 ausziehbar angeordnet; hier beispielsweise als Schraub- oder Magnetverschluss. Es lässt sich die Kombinationsbrille somit als Alltags-, Komfort- und Sportbrille, letztere mit über den Hinterkopf vorgesehener Verbindung, wie aus Fig. 1 ersichtlich ist, tragen.

Die Brillenbügel 2 sind zur Aufnahme des Gummizugs 6 hohl ausgebildet und mit einer Einlage 7 versehen mit Kunststoffhülle 8, welche einen Hohlgang für den Gummizug 6 bildet. Das Ende des Gummizugs 6 ist hier mittels aufgeschobener Klemmhülse 9 am Austritt 10 des Hohlgangs entsprechend Fig. 2 gehalten. Am freien Bügelende 4 ist der Verschlussteil 5 überdies bei 11 bei Nichtgebrauch verdeckt einfahrbar, wie dies aus Fig. 3 ersichtlich ist.

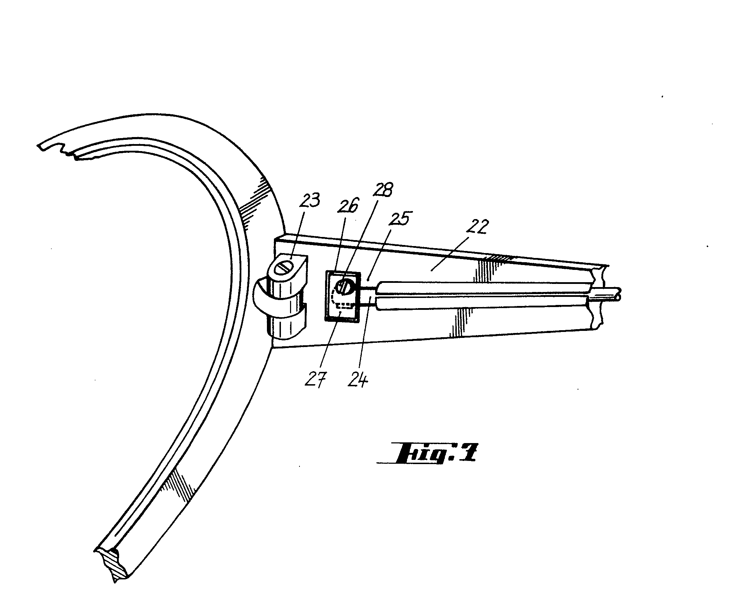

Beim zweiten Ausführungsbeispiel nach Fig. 4 bis 6 ist ein Brillenbügel 12 mit Scharnier 13, hier beispielsweise ein längeres Federscharnier, dargestellt. Am freien Ende 14 des Brillenbügels 12 ist hier ein Verschluss 15 in Form eines Hakens mittels Gummizug 16 ausziehbar angeordnet. Somit lässt sich auch die Kombinationsbrille als Alltags-, Komfort- und Sportbrille, letztere mit über dem Hinterkopf vorgesehener Verbindung, tragen.

Die Brillenbügel 12 sind zur Aufnahme des Gummizugs 16 hohl ausgebildet und zwar weist hier der Metallbügel 17 eine Innennut 17a mit zwei Seitenschenkeln 18 auf, welche nach dem Zubiegen den Hohlgang für den Gummizug 16 entpsrechend der Schnittdarstellung nach Fig. 5 bilden. Auch hier ist das Ende des Gummizugs 16 mittels übergeschobener Klemmhülse 19 am Austritt 20 des Hohlgangs entsprechend Fig. 5 gehalten und zwar verdeckt unter dem Federscharnier 13 eingelassen. Am freien Bügelende 14 ist der Hakenverschlussteil 15 überdies bei 21 bei Nichtgebrauch verdeckt einfahrbar, wie dies aus Fig. 6 ersichtlich wird.

Beim weiteren Ausführungsbeispiel nach Fig. 7 ist in perspektivischer Ansicht ein angelenkter Brillenbügel 22 mit Scharnier 23 dargestellt. Auch hier ist der Brillenbügel zur Aufnahme des Gummizugs 24 hohl ausgebildet und zwar als Metallbügel entsprechend dem vorhergehenden Ausführungsbeispiel. Hier ist der Gummizug 24 am Austritt 25 in einer Vertiefung 26 mittels Druckplättchen 27 und Klemmschraube 28 festgeklemmt, was eine nachträgliche Verkürzung bzw. auch einen Austausch des Gummizugs 24 vereinfacht.

Schliesslich ist in Fig. 8 bis 11 ein letztes Ausführungsbeispiel dargestellt. Hier besteht der Brillenbügel aus dem Kunststoffbügelteil 31 mit Metallende 32 und Brillenscharnierteil 33 zur Anlenkung am Brillengestell, wobei die Bügeleinlage 34 am Metallende 32 das biegsame Metallschlauchröhrchen 35 in einer Nut 36 aufnimmt. Das Metallende 32 weist den Beginn der Nut 36 der Bügeleinlage 34 für das Metallschlauchröhrchen 35 zur Aufnahme des Gummizugs 37 auf. Dieser Gummizug 37 ist hierbei am Metallende 32 mittels Knoten 38 zwischen den Seitenbacken 39 festgelegt. Am freien Bügelende ist der Gummizug 37 mit einem Kunststoffplättchen 40 umspritzt, welches teilweise in eine Endtasche 41 einfährt und eine Quernut 42 mit Widerhaken 43 aufweist und so dem gegenseitigen Einhängen bei aufgesetzter Brille hinter dem Kopf des Trägers zur Sicherung bei Sport und dgl. dient. Die Endhaken in Form von Kunststoffplättchen 40 mit Quernut 42 und Widerhaken 43 sind hier so ausgebildet, dass diese beidseits gleiche Form besitzen und damit nur eine Spritzform hierfür benötigt wird.

**Patentansprüche**

1. Kombinationsbrille, deren Kunststoff-Brillenbügel jeweils für ein Zugteil hohl ausgebildet sind und deren ausziehbare Befestigungsteile am freien Ende der Brillenbügel aus- und einfahrbar sind, gekennzeichnet durch die Kombination folgender Merkmale:
a) die Zugteile sind als Gummizüge ausgebildet, welche endseitig im Scharnieranschluss festgelegt sind,
b) die Gummizüge sind in biegsamen Metallschläuchen in den hohlen Brillenbügeln geführt, welche Metallschläuche in Nuten der Bügeleinlage aufgenommen und von aufsteck- oder umspritzbaren Kunststoffbügeln umgeben sind,
c) die Verschlussteile sind als im ausgefahrenen Zustand hinter dem Kopf des Trägers verbindbare Endstücke ausgebildet, welche in eingefahrener Stellung in Taschen am Bügelende liegen.

2. Kombinationsbrille, deren Brillenbügel jeweils für ein Zugteil hohl ausgebildet sind und deren ausziehbare Befestigungsteile am freien Ende der Brillenbügel aus- und einfahrbar sind, gekennzeichnet durch die Kombination folgender Merkmale:
a) die Zugteile sind als Gummizüge ausgebildet, welche endseitig im Scharnieranschluss festgelegt sind,
b) die Gummizüge sind in Alu-Brillenbügeln geführt, welche eine Innennut mit zwei Seitenschenkeln besitzen, die nach dem Zubiegen den Hohlgang für die Gummizüge bilden,
c) die Verschlussteile sind als im ausgefahrenen Zustand hinter dem Kopf des Trägers verbindbare Endstücke ausgebildet, welche in eingefahrener Stellung in Taschen am Bügelende liegen.

3. Kombinationsbrille nach einem der Ansprüche 1 oder 2, dadurch gekennzeichnet, dass die Gummizüge jeweils am Anlenkende der Brillenbügel beim Austritt aus dem hohlen Bügel mittels übergeschobener Klemmhülse verdeckt unter dem Bügelscharnier gehalten sind.

4. Kombinationsbrille nach einem der Ansprüche 1 oder 2, dadurch gekennzeichnet, dass die Gummizüge am Anlenkende der Brillenbügel mittels verschraubbarem Druckplättchen in einer Vertiefung verdeckt festgeklemmt sind.

5. Kombinationsbrille nach einem der Ansprüche 1 oder 2, dadurch gekennzeichnet, dass die Gummizüge jeweils am Anlenkende der Brillenbügel aus Kunststoff und Brillenscharnier mit anschliessender Bügeleinlage mittels einem Endknoten am Metallende zwischen zwei Seitenbacken aufgenommen sind.

6. Kombinationsbrille nach einem der Ansprüche 1 bis 5, dadurch gekennzeichnet, dass ein steck- oder schraub-verriegelbarer Schmuckkettenverschluss zum lösbaren Verbinden der beiden ausziehbaren Gummizugteile dient.

7. Kombinationsbrille nach einem der Ansprüche 1 bis 5, dadurch gekennzeichnet, dass ein Hakenverschluss zum lösbaren Verbinden der beiden ausziehbaren Gummizugteile dient.

8. Kombinationsbrille nach einem der Ansprüche 1 bis 5, dadurch gekennzeichnet, dass ein Magnetverschluss zum lösbaren Verbinden der beiden ausziehbaren Gummizugteile dient.

9. Kombinationsbrille nach einem der vorhergehenden Ansprüche 1 bis 5, dadurch gekennzeichnet, dass die Verschlussteile zum lösbaren Verbinden der beiden ausziehbaren Gummizugteile aus widerhakenartigen Teilen bestehen.

10. Kombinationsbrille nach Anspruch 9, dadurch gekennzeichnet, dass Kunststoffplättchen mit Widerhaken und Quernut Verwendung finden, wobei zur Herstellung das Gummizugende vom Kunststoffplättchen umspritzbar ist.

**Claims**

1. Combination glasses having plastic side-pieces designed as hollow bodies for receiving one elastic part each and extensible fastening parts that can be pulled out and retracted at the free end of the side-pieces, characterized by the combination of the following features:
a) the elastic parts take the form of strips of elastic having their one end fixed in the hinge connection;
b) the strips of elastic are guided in flexible metal hoses in the hollow side-pieces, the said metal hoses being accommodated in grooves in the side-piece inserts and enclosed in plastic side-pieces that can be fitted thereon or moulded thereabout;
c) the catch pieces are designed as end pieces which can be engaged in the pulled-out condition at the back of the user's head and which in the retracted condition are received in pockets provided at the end of the side-pieces.

2. Combination glasses having side-pieces designed as hollow bodies for receiving one elastic part each and extensible fastening parts that can be pulled out and retracted at the free end of the side-pieces, characterized by the combination of the following features:

a) the elastic parts take the form of strips of elastic having their one end fixed in the hinge connection;

b) the strips of elastic are guided in aluminium side-pieces provided with two laterally projecting flanks which after folding over form a hollow passage for the strips of elastic;

c) the catch pieces are designed as end pieces which can be engaged in the pulled-out condition at the back of the user's head and which in the retracted condition are received in pockets provided at the end of the side-piece.

3. Combination glasses in accordance with claim 1 or 2, characterized in that the strips of elastic are retained unterneath the hinge and covered by a clamping sleeve at the hinged end of the side-pieces, where the strips of elastic leave the hollow side-piece.

4. Combination glasses in accordance with claim 1 or 2, characterized in that the strips of elastic are clamped in a recess and covered by screwable pressure plates at the hinged end of the side-pieces.

5. Combination glasses in accordance with claim 1 or 2, characterized in that the strips of elastic are held at the hinged ends of the plastic side-pieces and the side-piece insert following the hinge, by means of a knot received at the end of the metal between two lateral jaws.

6. Combination glasses in accordance with any of claims 1 to 5, characterized in that a necklace catch of the screwing or plug-in type serves to provide a detachable connection for the two extensible strips of elastic.

7. Combination glasses in accordance with any of claims 1 to 5, characterized in that a hook catch serves to provide a detachable connection for the two extensible strips of elastic.

8. Combination glasses in accordance with any of claims 1 to 5, characterized in that a magnetic catch serves to provide a detachable connection for the two extensible strips of elastic.

9. Combination glasses in accordance with any of the proceding claims 1 to 5, characterized in that the parts providing the detachable connection for the two extensible strips of elastic take the form of barb-like parts.

10. Combination glasses in accordance with claim 9, characterized in that plastic plates with barbs and a transverse groove are used and that the said plate can be moulded about the end of the strip of elastic during production.

**Revendications**

1. Lunettes combinées dont les branches en matière plastique sont chacune conçues creuses pour un élément de traction et dont les éléments de fixation télescopiques sont déployables et rétractables aux extrémités libres des branches se distinguant par la combinaison des caractéristiques suivantes:

a) les éléments de traction sont conçus comme pièces de traction en caoutchouc, fixées aux extrémités dans le raccord de charnière,

b) les éléments de traction en caoutchouc sont logés dans des tubes métalliques flexibles, eux-mêmes situés dans les branches creuses, lesquels tubes métalliques se trouvent dans des rainures de la garniture de branche et sont entourés de branches en matière plastique amovibles ou fixées par extrusion,

c) les éléments de fermeture sont conçus comme pièces d'extrémité susceptibles d'être jointes, à l'état déployé, derrière la tête du porteur de lunette, éléments qui, en position rétractée, sont logés dans des poches situées aux extrémités des branches.

2. Lunettes combinées dont les branches sont chacune conçues creuses pour un élément de traction et dont les éléments de fixation télescopiques sont déployables et rétractables aux extrémités libres des branches, se distinguant par la combinaison des caractéristiques suivantes:

a) les éléments de traction sont conçus comme pièces de traction en caoutchouc, fixées aux extrémités dans le raccord de charnière,

b) les éléments de traction en caoutchouc sont logés dans des branches en alu qui possèdent une rainure intérieure à deux ailes latérales, lesquelles, après que les branches aient été repliées, forment la cavité destinée aux éléments de traction en caoutchouc,

c) les éléments de fermeture sont conçus comme pièces d'extrémité susceptibles d'être jointes, à l'état déployé, derrière la tête du porteur de lunettes, éléments qui, en position rétractée, sont logés dans des poches situées aux extrémités des branches.

3. Lunettes combinées d'après l'une des revendications 1 ou 2, caractérisées par le fait que les éléments de traction en caoutchouc sont chacun maintenus masqués sous la charnière de branche, au moyen d'une douille de serrage emmanchée, à l'extrémité articulée de la branche, lors de leur sortie hors des branches creuses.

4. Lunettes combinées d'après l'une des revendications 1 ou 2, caractérisées par le fait que les éléments de traction en caoutchouc sont, aux extrémités des branches, calés et masqués dans un évidement au moyen de plaquettes de compression visables.

5. Lunettes combinées d'après l'une des revendications 1 ou 2, caractérisées par le fait que les éléments de traction en caoutchouc sont chacun logés aux extrémités des branches en matière plastique et des charnières de lunettes avec garniture de branche raccordée, au moyen d'un noeud d'extrémité, sur le bout métallique et entre deux mâchoires latérales.

6. Lunettes combinées d'après l'une des revendications 1 à 5, caractérisées par le fait qu'une fermeture de chaîne d'ornement, verrouillable par enfichage ou par vissage, sert à la jonction amovible des deux éléments de traction télescopiques en caoutchouc.

7. Lunettes combinées d'après l'une des revendications 1 à 5, caractérisées par le fait qu'une fermeture à crochet sert à la jonction amovible des deux éléments de traction télescopiques en caoutchouc.

8. Lunettes combinées d'après l'une des revendications 1 à 5, caractérisées par le fait qu'une fermeture magnétique sert à la jonction amovible des deux éléments de traction télescopiques en caoutchouc.

9. Lunettes combinées d'après l'une des revendications 1 à 5 précédentes, caractérisées par le fait que les éléments de fermeture se composent d'éléments genre «barbe» pour la jonction amovible des deux éléments de traction télescopiques en caoutchouc.

10. Lunettes combinées d'après la revendication 9, caractérisées par le fait que sont utilisées des plaquettes en matière plastique avec barbe et rainure transversale, l'extrémité de l'élément en caoutchouc étant, pour la fabrication, encastré par extrusion dans la plaquette en matière plastique.

**Fig. 1**

0 058 772

Fig. 8

Fig. 10

Fig. 11

Fig. 9

0 058 772

Fig.2

Fig.3

Fig.5

Fig.4

Fig.6

0 058 772

Fig. 1